(19) Europäisches Patentamt
European Patent Office
Office européen des brevets

(11) Publication number: 0 236 116 A1

# (12) EUROPEAN PATENT APPLICATION

(21) Application number: 87301821.2

(22) Date of filing: 02.03.87

(51) Int. Cl.4: H 02 K 21/08
H 02 K 1/28, H 01 F 41/02

(30) Priority: 03.03.86 JP 45689/86

(43) Date of publication of application:
09.09.87 Bulletin 87/37

(84) Designated Contracting States: DE FR GB

(71) Applicant: POLYPLASTICS CO. LTD.
30 Azuchimachi 2-chome
Higashi-ku Osaka-shi (JP)

(72) Inventor: Okada, Tsuneyoshi
175-1, Shimosakunobu Takatsu-ku
Kawasaki-shi Kanagawa (JP)

Takeda, Yasuyuki
23-3, Minamigyotoku 3-chome
Ichikawa-shi Chiba (JP)

(74) Representative: Livsey, Gilbert Charlesworth Norris et al
HYDE, HEIDE & O'DONNELL 146 Buckingham Palace Road
London SW1W 9TR (GB)

## (54) Motor rotor.

(57) A motor rotor comprises a cylindrical ferrite and a shaft, said cylindrical ferrite being supported coaxially with said shaft by means of a melt-processable polymer capable of forming an anisotropic molten phase.

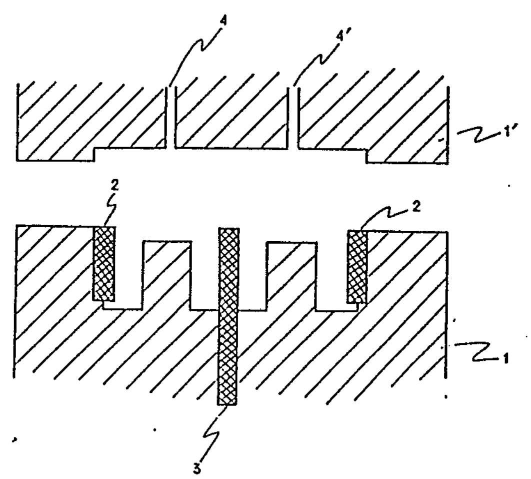


Fig. 1

EP 0 236 116 A1

**Description**

Motor Rotor

The present invention relates to a ferrite rotor of a motor such as micromotor.

Statement of Prior Arts

There are many instances where a cylindrical ferrite is used for a rotor of a small motor. The cylindrical ferrite is supported coaxially on the shaft by means of thermoplastic resin such as polyacetal. This is advantageously accomplished by the so-called insert injection molding. The disadvantage of this method is that the cylindrical ferrite having a very low tensile strength is broken by the injection pressure of the thermoplastic resin injected into the hollow of the cylinder. A remedy for this disadvantage is proposed in Japanese Patent Publication No. 33103/1984. According to the remedy, plastic is filled in the outer space of the cylindrical ferrite to protect the cylindrical ferrite from the outward injection pressure. The outer layer thus formed has to be removed by handwork after molding. This is a disadvantage. Such handwork offsets the efficient injection molding process, and the thermoplastic resin removed is wasted. Where the thermoplastic resin is nylon or similar engineering plastic, the cylindrical ferrite is broken by the contraction and expansion of the resin which take place when the temperature changes, because such a resin has a large coefficient of thermal expansion.

Summary of the Invention

The present invention was completed to solve the above-mentioned problems. According to the present invention, the cylindrical ferrite is supported by a melt-processable polymer which is capable of forming a special anisotropic molten phase, in place of the conventional resin. The motor rotor of this invention can be produced efficiently and can be used in a stable manner under severe conditions.

A motor rotor of the invention comprises a shaft, a cylinder of a ferrite and a supporting means to support said cylinder coaxially of said shaft, said supporting means consisting of a polymer being capable of the anisotropic phase in the molten state and the melt-processing.

It is preferred that the motor rotor has been obtained by moulding said polymer in a mould equipped with the cylinder and the shaft in advance. It is further preferable that said polymer is a polyester.

Brief Description of the Drawings:

Fig. 1 is a schematic sectional view of a mould with a cylindrical ferrite and a shaft inserted therein.

1, 1′ ... Moulds 2 ... Cylindrical ferrite 3 ... Shaft 4, 4′ ... Injection gates

As mentioned in detail in the following, the motor rotor of this invention is constructed such that the ferrite is supported on the shaft by means of a melt-processable polymer which is capable of forming the anisotropic molten phase. Because of its high fluidity, the polymer can be moulded at a low injection moulding pressure and it also tolerates a slight fluctuation of injection moulding pressure. In addition, the polymer has a coefficient of thermal expansion which is close to that of metals, and therefore, it undergoes very small dimensional change due to contraction and expansion induced by temperature change. Thus the present invention overcame the disadvantages of the conventional resins and solved the problems by using the new polymer.

Accordingly, it is an object of the present invention to provide a motor rotor which comprises a cylindrical ferrite and a shaft, said cylindrical ferrite being supported coaxially with said shaft by means of a melt-processable polymer capable of forming the anisotropic molten phase.

The melt-processable polymer capable of forming an anisotropic molten phase which is used in this invention has the properties of permitting the polymer molecular chains to assume regular parallel arrangement in the molten state. The state in which molecules are arranged in such a manner is referred to as the liquid crystal state or the nematic phase of a liquid crystal substance. The polymer like this is usually produced from a monomer which has a thin, long, and flat configuration, has a high rigidity along the long axis of the molecule, and has a plurality of chain extension linkages which are coaxial or parallel with one another.

The properties of the anisotropic molten phase can be determined by an ordinary polarization test using crossed nicols. More particularly, the properties can be determined with a Leitz polarizing microscope of 40 magnifications by observing a sample placed on a Leitz hot stage in a nitrogen atmosphere. The polymer is optically anisotropic. Namely, it transmits a light when it is placed between the crossed nicols When the sample is optically anisotropic, the polarized light can be transmitted through it even in a still state.

The constituents of the polymer to form the above-mentioned anisotropic molten phase are as follows:

(1) One or more of aromatic and alicyclic dicarboxylic acids,
(2) One or more of aromatic, alicyclic and aliphatic diols,
(3) One or more of aromatic hydroxycarboxylic acids,
(4) One or more of aromatic thiolcarboxylic acids,
(5) One or more of aromatic dithiols and aromatic thiolphenols,
(6) One or more of aromatic hydroxylamines and aromatic diamines.

The polymer to form the anisotropic molten phase comprises the following combinations:

GROUP A

I) a polyester comprising (1) and (2),
II) a polyester comprising only (3),
III) a polyester comprising (1), (2), and (3),
IV) a polythiol ester comprising only (4),
V) a polythiol ester comprising (1) and (5),
VI) a polythiol ester comprising (1), (4), and (5),
VII) a polyesteramide comprising (1), (3), and (6), and
VIII) a polyesteramide comprising (1), (2), (3), and (6).

In addition to the above-mentioned combinations of the constituents, the polymer to form the anisotropic molten phase also includes aromatic polyazomethines such as poly(nitrilo-2-methyl-1,4-phenylenenitriloethylidine-1,4-phenylenethylidine), poly(nitrilo-2-methyl-1,4-phenylenenitrilomethylidine-1,4-phenylenemethylidine), and poly(nitrilo-2-chloro-1,4-phenylenenitrilomethylidine-1,4-phenylenemethylidine).

Further, in addition to the above-mentioned combinations of the constituents, the polymer to form the anisotropic molten phase includes polyester carbonates each comprising essentially 4-hydroxybenzoyl units, dihydroxy-phenyl units, dihydroxycarbonyl units, and terephthaloyl units.

The compounds constituting the above-mentioned polymers I) to VIII) are listed below.

Aromatic dicarboxylic acids which include terephthalic acid, 4,4′-diphenyldicarboxylic acid, 4,4′-triphenyldicarboxylic acid, 2,6-naphthalenedicarboxylic acid, diphenyl ether-4,4′-dicarboxylic acid, diphenoxyethane-4,4′-dicarboxylic acid, diphenoxybutane-4,4′-dicarboxylic acid, diphenylethane-4,4′-dicarboxylic acid, isophthalic acid, diphenyl ether-3,3′-dicarboxylic acid, diphenoxyethane-3,3′-dicarboxylic acid, diphenylethane-3,3′-dicarboxylic acid, and naphthalene-1,6-dicarboxylic acid; and alkyl-, alkoxy-, or halogen-substituted aromatic dicaraboxylic acids which include chloroterephthalic acid, dichloroterephthalic acid, bromoterephthalic acid, methylterephthalic acid, dimethylterephthalic acid, ethylterephthalic acid, methoxyterephthalic acid, and ethoxyterephthalic acid.

Alicyclic dicarboxylic acids which include trans-1,4-cyclohexane-dicarboxylic acid, cis-1,4-cyclohexanedicarboxylic acid, and 1,3-cyclohexanedicarboxylic acid; and alkyl-, alkoxy-, or halogen-substituted alicyclic dicarboxylic acids which include trans-1,4-(1-methyl)cyclohexane dicarboxylic acid and trans-1,4-(1-chloro)cyclohexanedicarboxylic acid.

Aromatic diols which include hydroquinone, resorcinol, 4,4′-dihyroxydiphenyl, 4,4′-dihydroxytriphenyl, 2,6-naphthalenediol, 4,4′-dihydroxydiphenyl ether, bis-(4-hydroxyphenoxy)ethane, 3,3′-dihydroxydiphenyl, 3,3′-dihydroxydiphenyl ether, 1,6-naphthalenediol, 2,2-bis(4-hydroxyphenyl)propane, and 2,2-bis(4-hydroxyphenyl)methane; and alkyl-, alkoxy-, or halogen-substituted aromatic diols which include chlorohydroquinone, methylhydroquinone, 1-butylhydroquinone, phenylhydroquinone, methoxyhydroquinone, phenoxyhydroquinone, 4-chlororesorcinol, and 4-methylresorcinol.

Alicyclic diols which include trans-1,4-cyclohexanediol, cis-1,4-cyclohexanediol, trans-1,4-cyclohexanedimethanol, cis-1,4-cyclohexanedimethanol, trans-1,3-cyclohexanediol, cis-1,2-cyclohexanediol, and trans-1,3-cyclohexanedimethanol; and alkyl-, alkoxy-, and halogen-substituted alicyclic diols which include trans-1,4-(1-methyl)cyclohexanediol, and trans-1,4-(1-chloro)cyclohexanediol.

Aliphatic diols which include straight-chain or branched chain aliphatic diols such as ethylene glycol, 1,3-propanediol, 1,4-butanediol, and neopentyl glycol.

Aromatic hydroxycarboxylic acids which include 4-hydroxybenzoic acid, 3-hydroxybenzoic acid, 6-hydroxy-2-naphthoic acid, and 6-hydroxy-1-naphthoic acid; and alkyl-, alkoxy-, or halogen-substituted hydroxycarboxylic acids which include 3-methyl-4-hydroxybenzoic acid, 3,5-dimethyl-4-hydroxybenzoic acid, 2,6-dimethyl-4-hydroxybenzoic acid, 3-methoxy-4-hydroxybenzoic acid, 3,5-dimethoxy-4-hydroxybenzoic acid, 6-hydroxy-5-methyl-2-naphthoic acid, 6-hydroxy-5-methoxy-2-naphthoic acid, 3-chloro-4-hydroxybenzoic acid, 2-chloro-4-hydroxy-benzoic acid, 2,3-dichloro-4-hydroxybenzoic acid, 3,5-dichloro-4-hydroxybenzoic acid, 2,5-dichloro-4-hydroxybenzoic acid, 3-bromo-4-hydroxybenzoic acid, 6-hydroxy-5-chloro-2-naphthoic acid, 6-hydroxy-7-chloro-2-naphthoic acid, and 6-hydroxy-5,7-dichloro-2-naphthoic acid.

Aromatic mercaptocaroxylic acids which include 4-mercaptobenzoic acid, 3-mercaptobenzoic acid, 6-mercapto-2-naphthoic acid, and 7-mercapto-2-naphthoic acid.

Aromatic dithiols which include benzene-1,4-dithiol, benzene-1,3-dithiol, 2,6-naphthalenedithiol, and 2,7-naphthalenedithiol.

Aromatic mercaptophenols which include 4-mercaptophenol, 3-mercaptophenol, 6-mercaptophenol, and 7-mercaptophenol.

Aromatic hydroxylamines and aromatic diamines which include 4-aminophenol, N-methyl-4-aminophenol, 1,4-phenylenediamine, N-methyl-1,4-phenylenediamine, N,N′-dimethyl-1,4-phenylenediamine, 3-aminophenol, 3-methyl-4-aminophenol, 2-chloro-4-aminophenol, 4-amino-1-naphthol, 4-amino-4′-hydroxydiphenyl, 4-amino-4′-hydroxydiphenyl ether, 4-amino-4′-hydroxyphenylmethane, 4-amino-4′-hydroxydiphenyl sulfide, 4,4′-diaminophenyl sulfide (thiodianiline), 4,4′-diaminodi-phenyl sulfone, 2,5-diaminotoluene, 4,4′-ethylenedianiline, 4,4′-diaminodiphenoxyethane, 4,4′-diaminodiphenylmethane (methylenedianiline), and 4,4′-diaminodiphenyl ether (oxydianiline).

The polymers (I) to (VIII) each comprising the above-mentioned constituents may be divided into a group of those capable of forming the anisotropic molten phase and a group of those incapable of forming said phase according to the constituents, polymer composition, and sequence distribution. The polymers used in the

present invention are limited to those belonging to the former group.

Among the polymers capable of forming the anisotropic molten phase which are suitably used in the present invention, the polyesters (I), (II), and (III), and the polyesteramides (VIII) can be prepared by various ester forming processes wherein organic monomers each having a functional group which can form a desired recurring unit by the condensation are reacted with each other. The functional groups of these organic monomers include carboxyl, hydroxyl, ester, acryloxy, acyl halide, and amine groups. These organic monomers can be reacted by melt acidolysis in the absence of any heat exchange fluid. In this process, the monomers are heated to form a melt of reactants. As the reaction proceeds, the solid polymer particles begin to suspend in the melt. In the final stage of the condensation reaction, the reaction system may be evacuated to facilitate the removal of volatile by-products such as acetic acid and water.

A slurry polymerization process may also be employed in the preparation of fully aromatic polyesters suitable for use in the present invention. In this process, the solid product is obtained in the form of suspension in a heat exchange medium.

In either of said melt acidolysis and slurry polymerization processes, the organic monomeric reactants from which the fully aromatic polyesters can be derived may be employed in the reaction in a modified form obtained by esterifying the hydroxyl group of the monomer at ambient temperature (i.e., in the form of their lower acyl esters). The lower acyl groups have preferably about 2 to 4 carbon atoms. Preferably, acetate esters of the organic monomeric reactants are employed in the reaction.

Typical examples of the catalysts that can be used in both of the melt acidolysis and slurry processes include dialkyltin oxides (such as dibutyltin oxide), diaryltin oxides, titanium dioxide, antimony trioxide, alkoxytitanium silicates, titanium alkoxides, alkali metal and alkaline earth metal salts of carboxylic acids (such as zinc acetate), Lewis acids (such as $BF_3$), and hydrogen halides and other gaseous acids (e.g., HCl). The catalyst is generally used in an amount of about 0.001 to 1 wt%, particularly about 0.01 to 0.2 wt%, based on the monomer.

The fully aromatic polymers suitable for use in the present invention are substantially insoluble in ordinary solvents and, therefore, they are unsuitable for use in a solution processing. However, as described above, these polymers can be processed easily by the ordinary melt processing. Particularly preferred fully aromatic polymers are soluble in pentafluorophenol to some extent.

The fully aromatic polyester which is preferably used in the present invention have a weight-average molecular weight of about 2,000 to 200,000, preferably about 10,000 to 50,000, particularly about 20,000 to 25,000. The fully aromatic polyesteramides which is preferably used in the present invention have a molecular weight of about 5,000 to 50,000, preferably about 10,000 to 30,000, for example, 15,000 to 17,000. The molecular weight may be determined by gel permeation chromatography or other standard methods which need no polymer solution, such as a method in which terminal groups are determined by infrared spectroscopy using a compression-molded film sample. The molecular weight may also be determined by the light-scattering method using a solution of pentafluorophenol.

When the fully aromatic polyester or polyesteramide is dissolved in pentafluorophenol at 60°C in a concentration of 0.1 wt%, the solution has an inherent viscosity (I.V.) of at least about 2.0 dl/g, for example, about 2.0 to 10.0 dl/g.

The anisotropic molten phase-exhibiting polymer which is used in the present invention is preferably an aromatic polyester and aromatic polyesteramide. A preferred example is a polyester which partly contains an aromatic polyester and aromatic polyesteramide in the same molecular chain.

They are composed of the following compounds which are listed as preferred examples. Naphthalene compounds such as 2,6-naphthalenedicarboxylic acid, 2,6-dihydroxynaphthalene, 1,4-dihydroxynapthalene, and 6-hydroxy-2-naphthoic acid; biphenyl compounds such as 4,4′-diphenyldicarboxylic acid, and 4,4′-dihydroxybiphenyl; and compounds represented by Formula I, II or III below:

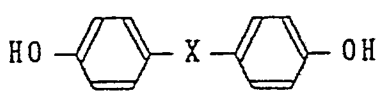
( I )

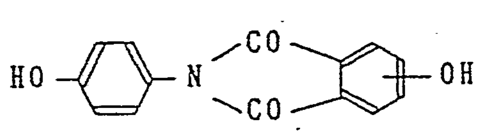
( II )

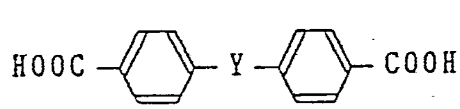
( III )

(where X is a group selected from $C_1$-$C_4$ alkylene, alkylidene, -O-, -SO-, -$SO_2$-, -S-, and -CO-; and Y is a group

selected from $-(CH_2)_n-[n=1\text{-}4]$ and $-O(CH_2)_nO-[n=1\text{-}4]$) p-substituted benzene compounds such as p-hydroxybenzoic acid, terephthalic acid, hydroquinone, p-aminophenol, and p-phenylenediamine, and nucleus-substituted benzene compounds thereof (with the substituent group selected from chlorine, bromine, methyl, phenyl, and 1-phenylethyl); and m-substituted benzene compounds such as isophthalic acid and resorcin.

A preferred example of the polyester which partly contains the above-mentioned constituents in the same molecule is polyalkylene terephthalate in which the alkyl group has 2 to 4 carbon atoms.

Other preferred examples of the above-mentioned constituents are those which contain as essential constituents one or more kinds selected from naphthalene compounds, biphenyl compounds, and p-substituted benzene compounds. Particularly preferred examples of the p-substituted benzene compounds include p-hydroxybenzoic acid, methylhydroquinone, and 1-phenylethylhydroquinone.

The constituents may be combined as illustrated below.

1) 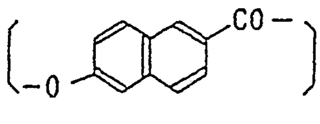 、 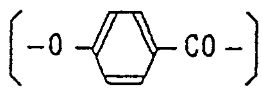

2) 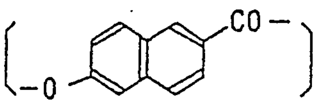 、 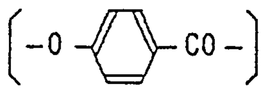 、 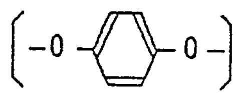 、

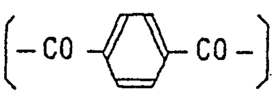

3) 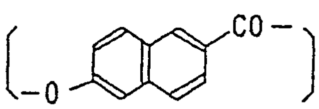 、 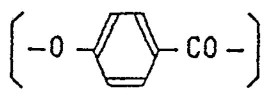 、 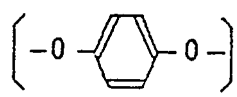 、

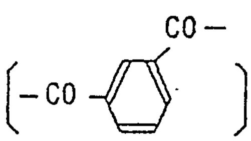

4) 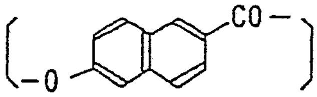 、 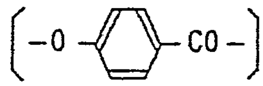 、

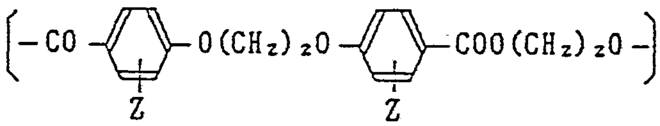

5) 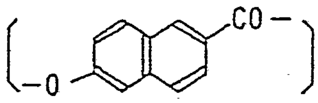 、 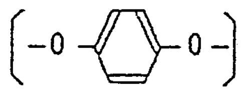 、

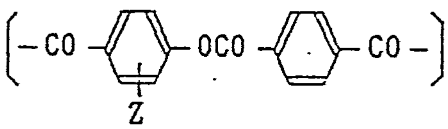 、 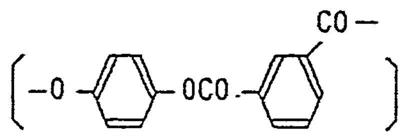

6) 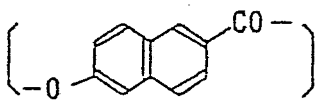 、 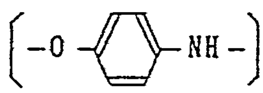 、 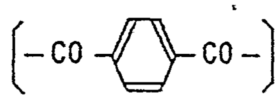

7) 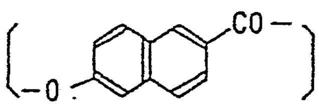 、 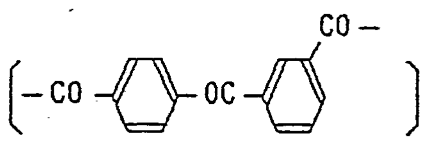 、

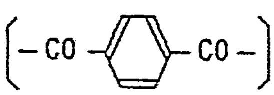

8) 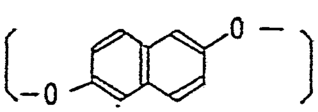 、 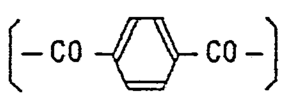 、 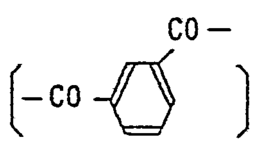

9) 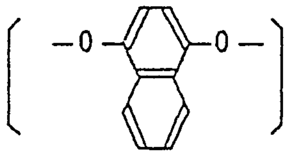 、 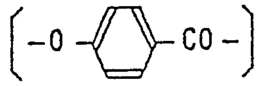 、 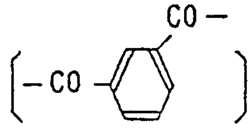

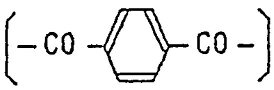

10) 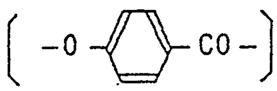 、 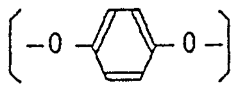 、 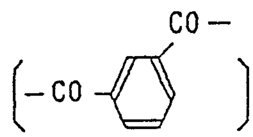

11) 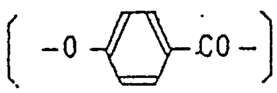 、 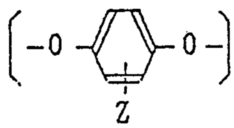 、 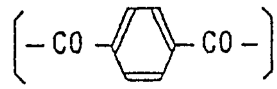

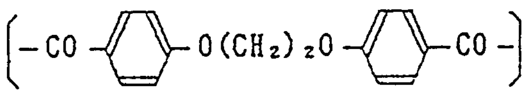

12) 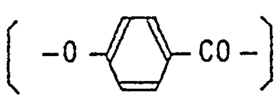 、 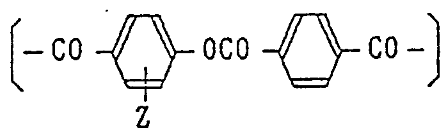 、

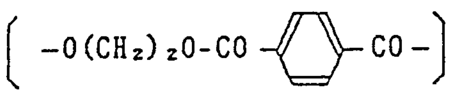

13) 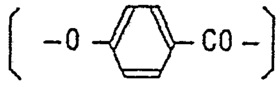 , 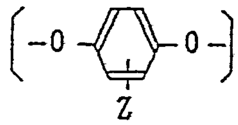 , 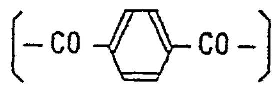 ,

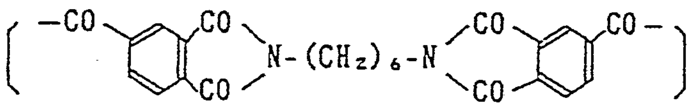

14) 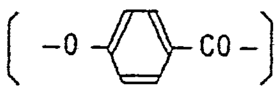 , 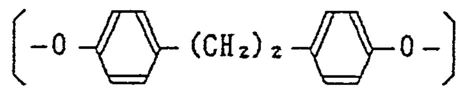 ,

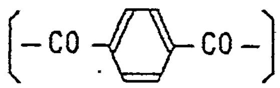

15) 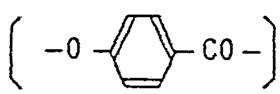 , 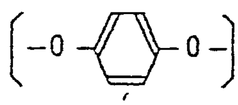 , 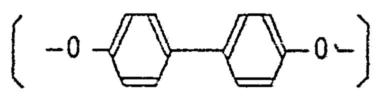 ,

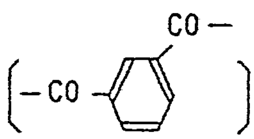

16) 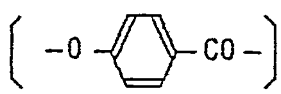 , 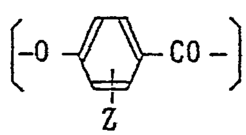 , 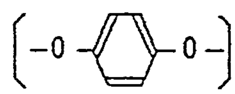 ,

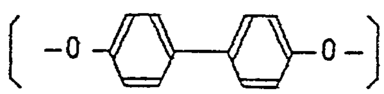 , 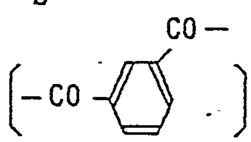

17) 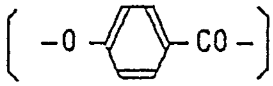 、 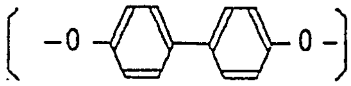 、 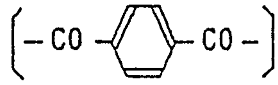

18) 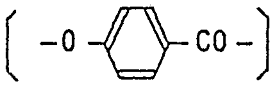 、 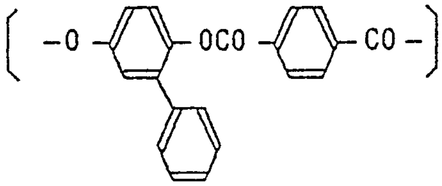 、

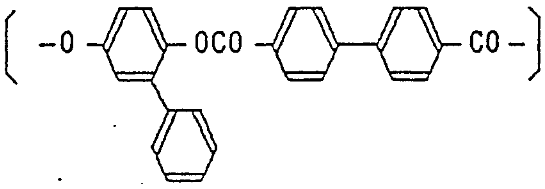

19) 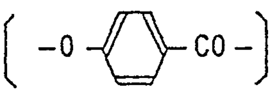 、 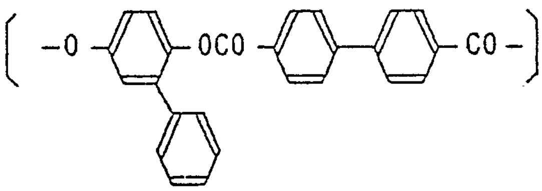 、

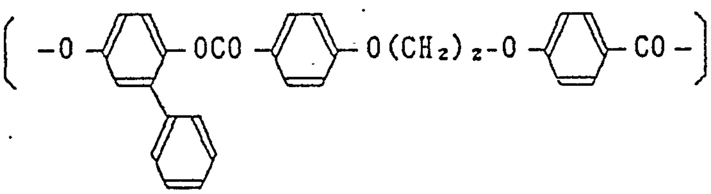

20) 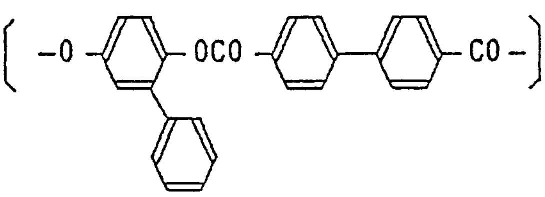 、

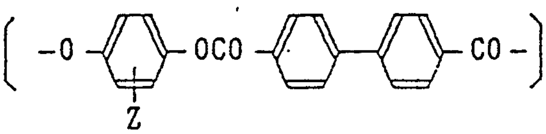

21) 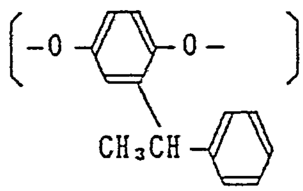 、 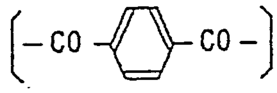

22) 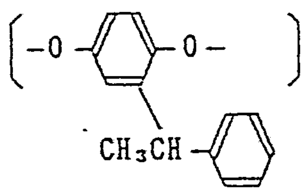 、 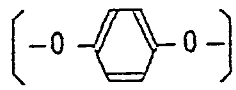 、 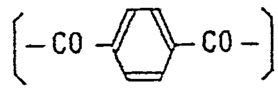

23) 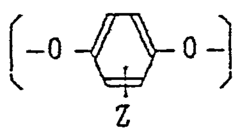 、 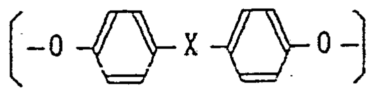 、

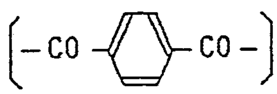 、 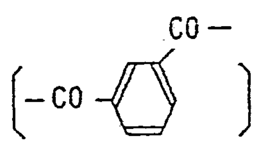

24) 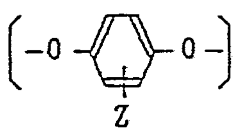 、 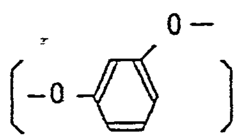 、 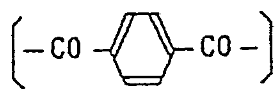

25) 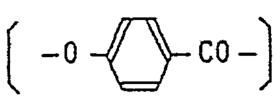 、 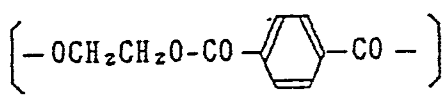

26) 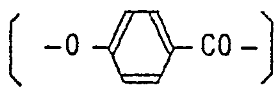, 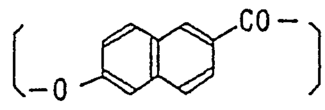,

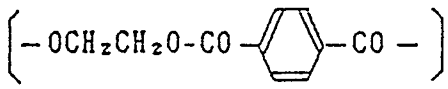

27) 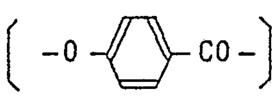, 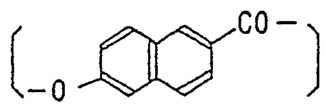,

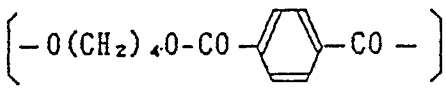

In the above formulas, Z is a substituent group selected from -Cl, -Br, and $-CH_3$, and X is a substituent group selected from $C_1$-$C_4$ alkylene, alkylidene, -O-, -SO-, $-SO_2-$, -S-, and -CO-.

The anisotropic molten phase-forming polyester which is preferably used in the present invention includes those containing at least about 10 mol% of a naphthalene moiety-containing recurring unit such as 6-hydroxy-2-naphthoyl, 2,6-dihydroxynaphthalene, and 2,6-dicarboxynaphthalene. Preferred polyesteramides are those having a recurring unit comprising the above-mentioned naphthalene moiety and 4-aminophenol or 1,4-phenylenediamine moiety. Their examples are listed in the following.

(1) Polyesters essentially comprising the following recurring units I and II:

I 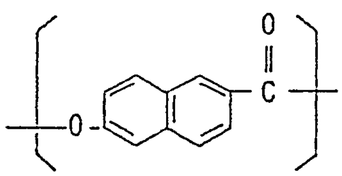

II 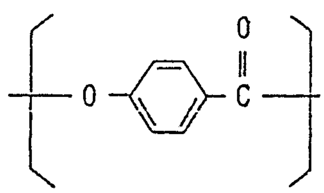

These polyesters comprise about 10 to 90 mol% of unit I and about 10 to 90 mol% of unit II. In one embodiment, unit I is contained in an amount of about 65 to 85 mol%, preferably about 70 to 80 mol% (for example, about 75 mol%). In another embodiment, unit II is contained in an amount of about 15 to 35 mol%, preferably about 20 to 30 mol%. At least part of the hydrogen atoms attaching directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations thereof.

(2) Polyesters essentially comprising the following recurring units I, II, and III:

I 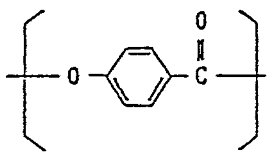

II 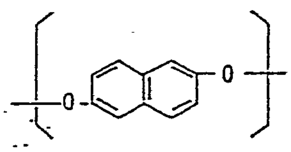

III 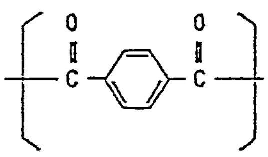

These polyesters contain about 30 to 70 mol% of unit I. They comprise preferably about 40 to 60 mol% of unit I, about 20 to 30 mol% of unit II, and about 20 to 30 mol% of Unit III. At least part of the hydrogen atoms attaching directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations thereof.

(3) Polyesters essentially comprising the following recurring units I, II, III, and IV.

I 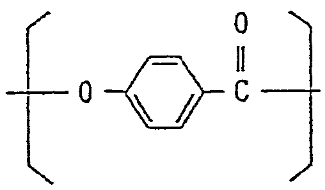

II 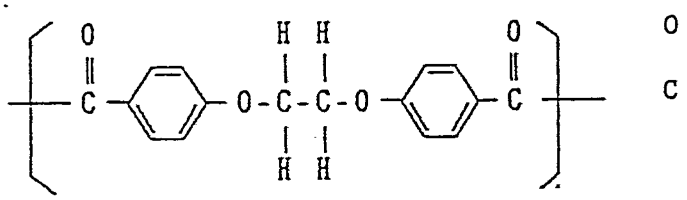

III 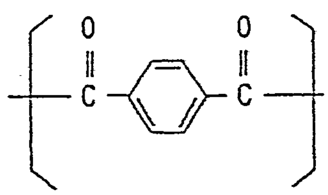

IV 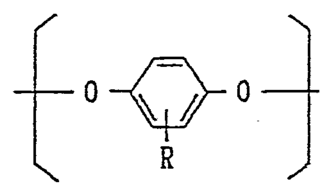

(wherein R represents a methyl group, chlorine atom, bromine atom, or a combination thereof which is a substituent for the hydrogen atom attaching to the aromatic ring.) These polyesters contain about 20 to 60 mol% of unit I, about 5 to 18 mol% of unit II, about 5 to 35 mol% of unit III, and about 20 to 40 mol% of unit IV. Preferably, they comprise about 35 to 45 mol% of unit I, about 10 to 15 mol% of unit II, about 15 to 25 mol% of unit III, and about 25 to 35 mol% of unit IV, with the proviso that the total molar concentration of units II and III is substantially equal to that of unit IV. As least part of the hydrogen atoms attaching directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations thereof. The fully aromatic polyester has an intrinsic viscosity of at least 2.0 dl/g, for example 2.0 to 10.0 dl/g, when measured with a 0.3 w/v% solution in pentafuorophenol at 60° C.

(4) Polyesters essentially comprising the following recurring units I, II, III, and IV:

I 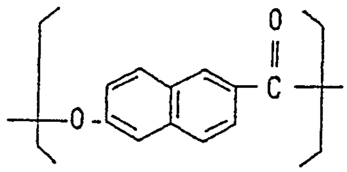 ,

II 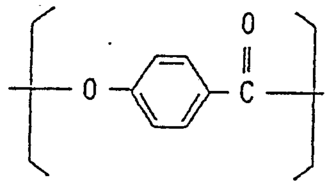 ,

III dioxyaryl units of the general formula: $-[O-Ar-O]-$ wherein Ar represents a divalent group having at least one aromatic ring, and
IV dicarboxyaryl units of the general formula:

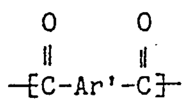

wherein Ar′ represents a divalent group having at least one aromatic ring.
The amount of unit I is about 20 to 40 mol%; the amount of unit II is 10 mol% to about 50 mol%; the amount of unit III is 5 mol% to about 30 mol%; and the amount of unit IV is 5 mol% to 30 mol%. These polyesters comprise preferably about 20 to 30 mol% (for example, about 25 mol%) of unit I, about 25 to 40 mol% (for example, about 35 mol%) of unit II, about 15 to 25 mol% (for example, about 20 mol%) of unit III, and about 15 to 25 mol% (for example, about 20 mol%) of unit IV. If necessary, at least part of the hydrogen atoms attaching directly to the ring may be replaced with a substituent selected from the group consisting of alkyl groups having 1 to 4 carbon atoms, alkoxy group having 1 to 4 carbon atoms, halogen atoms, a phenyl group, substituted phenyl groups, and combinations thereof.
The units III and IV are preferably symmetrical in a sense that the divalent bonds which connect the unit III or IV to the adjacent units are symmetrical on one or more aromatic rings (for example, at the p-position or diagonal position in the case of naphthalene ring). However, asymmetrical units derived from resorcinol and isophthalic acid may also be used.
A preferred dioxyaryl unit III is as follows:

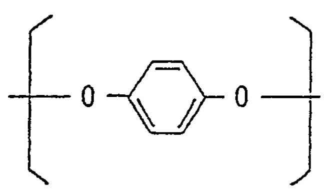

and a preferred dicarboxyaryl unit IV is as follows:

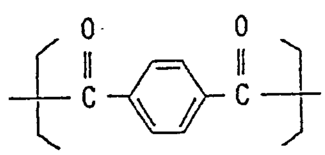

(5) Polyesters essentially comprising the following recurring units I, II, and III;

I. 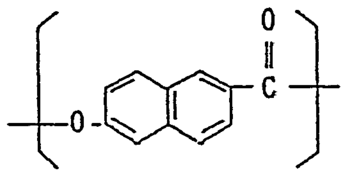

II. dioxyaryl units of the general formula: $-[O-Ar-O]-$ wherein Ar represents a divalent group having at least one aromatic ring,
III. dicarboxyaryl units of the general formula:

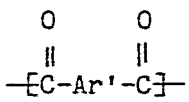

wherein Ar′ represents a divalent group having at least one aromatic ring.
The amounts of units I, II, and III are about 10 to 90 mol%, 5 to 45 mol%, 5 to 45 mol%, and 5 to 45 mol%, respectively. These polyesters comprise preferably about 20 to 80 mol% of unit I, about 10 to 40 mol% of unit II, and about 10 to 40 mol% of unit III. More preferably, they comprise about 60 to 80 mol% of unit I, about 10 to 20 mol% of unit II, and about 10 to 20 mol% of unit III. If necessary, at least part of the hydrogen atoms attaching directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations thereof.
A preferred dioxyaryl unit II is as follows:

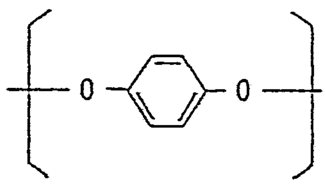

and a preferred dicarboxyaryl unit III is as follows:

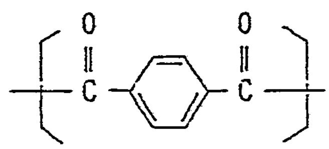

(6) Polyesteramides essentially comprising the following recurring units I, II, III, and IV:

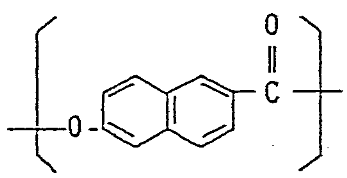

II. units of the general formula:

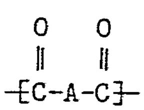

wherein A represents a divalent group having at least one aromatic ring or a divalent transcyclohexane group,
III. units of the general formula: $-[Y-Ar-Z]-$ wherein Ar represents a divalent group having at least one aromatic ring, Y represent O, NH or NR, and Z represents NH or NR, R being an alkyl group having 1 to 6 carbon atoms or an aryl group, and

IV. units of the general formula: $-[O-Ar'-O]-$ wherein Ar′ represents a divalent group having at least one aromatic ring.

The amounts of units I, II, III, and IV are about 10 to 90 mol%, about 5 to 45 mol%, about 5 to 45 mol%, and about 0 to 40 mol%, respectively. If necessary, at least part of the hydrogen atoms attaching directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations thereof.

A preferred dicarboxyaryl unit II is as follows:

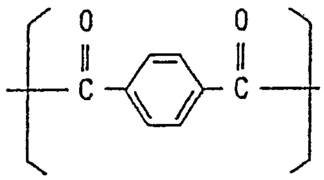

a preferred unit III is as follows:

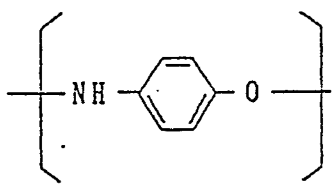

or

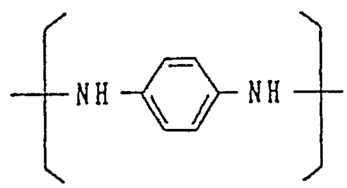

and a preferred dioxyaryl unit IV is as follows:

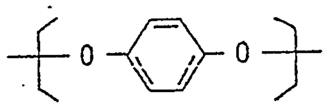

The anisotropic molten phase forming polymers of the present invention also include those wherein part of a polymer chain comprises a segment of the above-mentioned anisotropic molten phase-forming polymer and the balance comprises a segment of a thermoplastic resin which does not form an anisotropic molten phase.

According to the present invention, the melt-processable polymer which is capable of forming the anisotropic molten phase has the above-mentioned chemical composition. The one having a weight-average molecular weight of about 2,000 to 50,000 is suitable for use in this invention. With a weight-average molecular weight less than 2,000, the polymer is insufficient in modulus and strength; and with a weight-average molecular weight greater than 50,000, the polymer is poor in fluidity and causes damage to the ferrite. A preferred polymer has a weight-average molecular weight of 3,000 to 30,000. The polymer may be incorporated with a fibrous filler such as glass fiber, carbon fiber, wollastonite, and potassium titanate fiber; a platy filler such as mica; or a particulate filler such as silica.

The motor rotor of this invention includes a variety of embodiments. For example, (1) an embodiment in which the cylindrical ferrite and the preformed shaft are integrally fixed by insert molding as mentioned above, (2) an embodiment in which the support for the cylindrical ferrite is formed by insert molding and the shaft is attached to the support by fitting or any other commonly used means, and (3) an embodiment in which the support for the cylindrical ferrite and the shaft are molded simultaneously with the same polymer at the time of insert molding. The production of the rotor will slightly differ depending on the embodiment used.

The melt-processable polymer capable of forming the anisotropic molten phase which is used in this invention has a very low melt viscosity; therefore, it can be molded at a lower pressure than the ordinary thermoplastic resins. For this reason, it does not damage the cylindrical ferrite when injected into the hollow of the cylindrical ferrite, even though the outer layer (as disclosed in Japanese Patent Publication No. 33103/1984) to counterbalance the injection pressure is not formed. It is a matter of course that the rotor may have the outer layer for the counterbalancing of injection pressure. In this case, the outer layer is formed first so that it applies no or slight compressive force to the ferrite.

The rotor is produced by the so-called insert injection molding method. In the case of embodiment (1) as mentioned above, the cylindrical ferrite and the preformed shaft are properly positioned in the mold prior to injection molding. Since such arrangement prevents the formation of a center gate, it is desirable that several gates be formed at positions symmetrical with respect to the center of the shaft.

In the case of embodiment (2) as mentioned above, a hole into which the shaft is fitted should be formed in the plastic part at the time of insert molding. The molding may be performed in the same manner as in

embodiment (1).

In the case of embodiment (3) as mentioned above, the commonly used metal shaft is replaced by the plastics shaft which is integrally molded with the support of the cylindrical ferrite. A single center gate at the shaft may suffice; but several gates may be formed for pressure balancing.

The above-mentioned resin is so strong as to be made into the shaft of the rotor.

[Effect of the invention]

The present invention having the above-mentioned constitution has realized the simplified production of motors which had not been achieved with conventional high-strength high-modulus engineering plastics such as nylon-66, glass fiber-reinforced polyalkylene terephthalate resin, polyacetal resin, polyphenylene ether resin, and polycarbonate resin.

The polymer used in this invention has the lowest coefficient of thermal expansion, particularly the lowest coefficient of linear expansion in the direction of flow, among thermoplastic resins. In addition, it has the coefficient of thermal expansion close to that of ferrite. Therefore, it does not exert an undue force to the ferrite and consequently it does not damage the ferrite even when the temperature change, which causes contraction and expansion, takes place while the motor is in use. The motor provided with the rotor of this invention can be used under considerably severe conditions.

As mentioned above, the polymer has good fluidity when melted and has a low molding shrinkage. This permits precision molding without undue force on the ferrite which otherwise might occur during molding. These properties along with high strength make it possible to integrally mold the support of the ferrite and the shaft at one time.

[Examples]

The invention is now described in more detail with reference to the following examples, which should not be construed as limiting the scope of the invention.

Referential Example 1

1261 parts by weight of 4-acetoxybenzoic acid and 691 parts by weight of 6-acetoxy-2-naphthoic acid were placed in a reactor provided with a stirrer, a nitrogen inlet tube, and a distillation tube. The mixture was heated at 250° C under a nitrogen stream and stirred vigorously at that temperature for 3 h and then at 280° C for 2 h while acetic acid was distilled off from the reactor. The temperature was elevated to 320° C and the feeding of nitrogen was stopped. The pressure in the reactor was reduced gradually to 0.1 mmHg after 20 min. The mixture was stirred at that temperature under that pressure for 1 h.

The resulting polymer had an intrinsic viscosity of 5.4 as determined in pentafluorophenol at a concentration of 0.1 wt% at 60° C.

The resulting polymer has the following constitutional units.

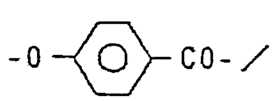 / 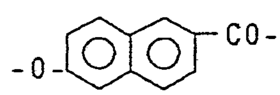 = 70 / 30

Referential Example 2

1081 parts by weight of 4-acetoxybenzoic acid, 460 parts by weight of 6-acetoxy-2-naphthoic acid, 166 parts by weight of isophthalic acid, and 194 parts by weight of 1,4-diacetoxybenzene were fed to a reactor provided with a stirrer, a nitrogen inlet tube, and a distillation tube. The mixture was heated to 260° C under a nitrogen stream and stirred vigorously at that temperature for 2.5 h and then at 280° C for 3 h while acetic acid was distilled off from the reactor. The temperature was elevated to 320° C and the feeding of nitrogen was stopped. The pressure in the reactor was reduced gradually to 0.1 mmHg after 15 min. The mixture was stirred at that temperature under that pressure for 1 h.

The resulting polymer had an intrinsic viscosity of 5.0 as determined in pentafluorophenol at a concentration of 0.1 wt% at 60° C.

The resulting polymer has the following constitutional units.

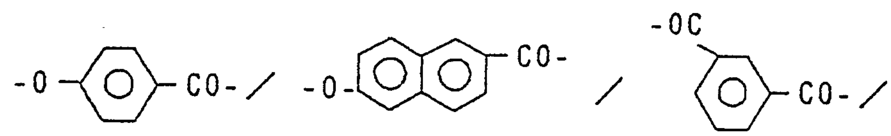

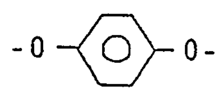 = 60 / 20 / 10 / 10

Referential Example 3

1081 parts by weight of 4-acetoxybenzoic acid, 489 parts by weight of 2,6-diacetoxynaphthalene, and 332 parts by weight of terephthalic acid were fed to a reactor provided with a stirrer, a nitrogen inlet tube, and a distillation tube. The mixture was heated to 250°C under a nitrogen stream and stirred vigorously at that temperature for 2 h and then at 280°C for 2.5 h while acetic acid was distilled off from the reactor. The temperature was elevated to 320°C and the feeding of nitrogen was stopped. The pressure in the reactor was reduced gradually to 0.2 mmHg after 30 min. The mixture was stirred at that temperature under that pressure for 1.5 h.

The resulting polymer had an intrinsic viscosity of 2.5 as determined in pentafluorophenol at a concentration of 0.1 wt% at 60°C.

The resulting polymer has the following constitutional units.

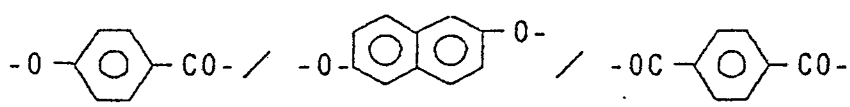

= 60 / 20 / 20

Referential Example 4

1612 parts by weight of 6-acetoxy-2-naphthoic acid, 290 parts by weight of 4-acetoxyacetanilide, 249 parts by weight of terephthalic acid, and 0.4 parts by weight of sodium acetate were placed in a reactor provided with a stirrer, a nitrogen inlet tube, and a distillation tube. The mixture was heated to 250°C under a nitrogen stream and stirred vigorously at that temperature for 1 h and then at 300°C for 3 h while acetic acid was distilled off from the reactor. The temperature was elevated to 340°C and the feeding of nitrogen was stopped. The pressure in the reactor was reduced gradually to 0.2 mmHg after 30 min. The mixture was stirred at that temperature under that pressure for 30 min.

The resulting polymer had an intrinsic viscosity of 3.9 as determined in pentafluorophenol at a concentration of 0.1 wt% at 60°C.

The resulting polymer has the following constitutional units.

D : 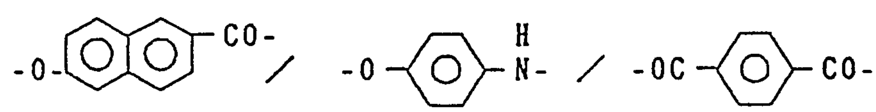

= 70 / 15 / 15

Example 1

A resin composition was prepared from 100 parts by weight of the polymer having a weight-average molecular weight of 20,000 obtained in Referential Example 1, 25 parts of glass fiber, and 25 parts of wollastonite. The resin composition was made into 20 rotors by injection molding at 300°C using molds (1 and 1′) with a cylindrical ferrite (2) and shaft (3) inserted therein as shown in Fig. 1. The cylindrical ferrite is 6 cm in outside diameter, 8 mm in wall thickness, and 5 cm in length. The gates are indicated by numerals 4 and 4′. Upon microscopic examination after molding, no microcracks were found on the cylindrical ferrite. The rotor was subjected to 100 cycles of heating (120°C for 4 hours) and cooling (-40°C for 4 hours). After the heating-cooling cycles, no microcracks were found.

Examples 2 to 4

Rotors were produced in the same manner as in Example 1 except that the polymer was replaced by those obtained in Referential Examples 2 to 4. Upon microscopic examination, no microcracks were found on the cylindrical ferrite. In addition, no microcracks occurred after the heating-cooling cycles.

Comparative Example 1

A rotor of the same shape as in Example 1 was produced form polyamide resin (nylon-66) by injection moulding according to the process disclosed in Japanese Patent Publication No. 33103/1984. The rotor, with the outer layer removed, was subjected to the heating-cooling cycles in the same manner as in Example 1. Microcracks were found on the cylindrical ferrite.

Thus, in summary this invention discloses:-

A motor rotor which comprises a shaft, a cylinder of a ferrite and a supporting means to support said cylinder coaxially of said shaft, said supporting means consisting of a polymer being capable of or adopting the anisotropic phase in the molten state and the melt-processing.

A rotor, in particular for a micromotor, comprising a ferrite cylinder carried spaced from an axis by an annular body made by injection moulding of plastics material, being effected with the ferrite cylinder in position characterised in that, a polyester is employed for forming said annular body, this polyester being of a type which when heated for injection moulding and when in a molten state is in an anisotropic phase.

The motor rotor of this invention being formed in a variety of ways. For example, (1) the cylindrical ferrite and the preformed shaft are integrally fixed by insert moulding, the mould for example being equipped with the cylinder and the shaft in advance, the annular body thus provided being formed about an axial shaft during the injection moulding process, (2) the support for the cylindrical ferrite is formed by insert moulding and the shaft is attached to the support by fitting or any other commonly used means, and (3) the support for the cylindrical ferrite and the shaft are moulded simultaneously with the same polymer at the time of insert moulding, the annular body so formed defining an axial shaft during the injection moulding process for example.

In preferred embodiments, the polymer of the supporting means is a polyester or a polythiol ester or a polyester amide or a combination of two or three of these such as those in GROUP A as described in the text which are capable of adopting the anisotropic phase in the molten state and during melt-processing.

In a first such preferred embodiment, a polyester comprises:- a) one or more of aromatic and alicyclic dicarboxylic acids, and one or more of aromatic, alicyclic and aliphatic diols and/or comprises

b) one or more of aromatic hydroxycarboyxlic acids.

In a second such preferred embodiment a polythiol ester comprises:-

a) one or more of aromatic and alicyclic dicarboxylic acids, and one or more of aromatic dithiols and aromatic thiolphenols and/or comprises

b) one or more of aromatic thiolcarboxylic acids.

In a third such preferred embodiment a polyesteramide comprises:-

a) one or more of aromatic and alicyclic dicarboxylic acids, one or more of aromatic hydrocarboxylic acids, and one or more of aromatic hydroxylamines and aromatic diamines and/or comprises

b) one or more of aromatic, alicyclic and aliphatic diols.

In another such embodiment, the polymer is an aromatic polyester in combination with an aromatic polyesteramide, the polymer being in the anisotropic phase when moulded. Polyalkylene terephthalate in which the alkyl group has 2 to 4 carbon atoms is preferred as such a polymer. Preferably the polyester contains at least 10 mol% of a naphthalene moiety-containing recurring unit such as 6-hydroxy-2-naphthoyl, 2,6-dihydroxynaphthalene, and 2,6-dicarboxynaphthalene. Preferred polyesteramides are those having a recurring unit comprising the above-mentioned naphthalene moiety and 4-aminophenol or 1,4-phenylene-diamine moiety.

The polymer of the invention includes those wherein part of a polymer chain of the polymer comprises a segment of the anisotropic molten phase-forming polymer and the balance comprises a segment of a thermoplastic resin which does not form an anisotropic molten phase.

In one embodiment of the invention, the polyester is combined with a filler and glass fibres to form a resin composition for melt-processing into the body, the filler and the glass fibres not exceeding 50% by weight of the composition.

## Claims

1. A motor rotor which comprises a shaft, a cylinder of a ferrite and a supporting means to support said cylinder coaxially of said shaft, said supporting means consisting of a polymer being capable of the anisotropic phase in the molten state and the melt-processing.

2. A motor rotor as claimed in Claim 1, which has been obtained by moulding said polymer in a mould equipped with the cylinder and the shaft in advance.

3. A motor rotor as claimed in Claim 1, in which said polymer is a polyester.

4. A motor rotor as claimed in Claim 1, in which said polymer is an aromatic polyester in combination with an aromatic polyesteramide, which polymer is in the anisotropic phase when moulded.

5. A motor rotor as claimed in Claim 3, in which said polyester contains at least 10 mol% of a naphthalene moiety-containing recurring unit.

6. A motor rotor as claimed in Claim 1, wherein part of a polymer chain of said polymer comprises a segment of the anisotropic molten phase-forming polymer and the balance comprises a segment of a thermoplastic resin which does not form an anisotropic molten phase.

7. A rotor, in particular for a micromotor, comprising a ferrite cylinder carried spaced from an axis by an annular body made by injection moulding of plastics material, being effected with the ferrite cylinder in position characterised in that, a polyester is employed for forming said annular body, this polyester being of a type which when heated for injection moulded and when in the molten state is in an anisotropic phase.

8. A rotor according to claim 8, characterised in that said polyester is combined with a filler and glass fibres to form a resin composition for melt-processing into said body, the filler and the glass fibres not exceeding 50% by weight of the composition.

9. A rotor according to claim 8 wherein said body is formed about an axial shaft during the injection moulding process.

10. A rotor according to claim 8 wherein said body is formed to define an axial shaft during the injection moulding process.

11. A motor rotor which comprises a shaft, a cylinder of a ferrite and a supporting means to support said cylinder coaxially of said shaft, said supporting means consisting of a polymer which during melt-processing and when in a molten state exhibits an anisotropic phase.

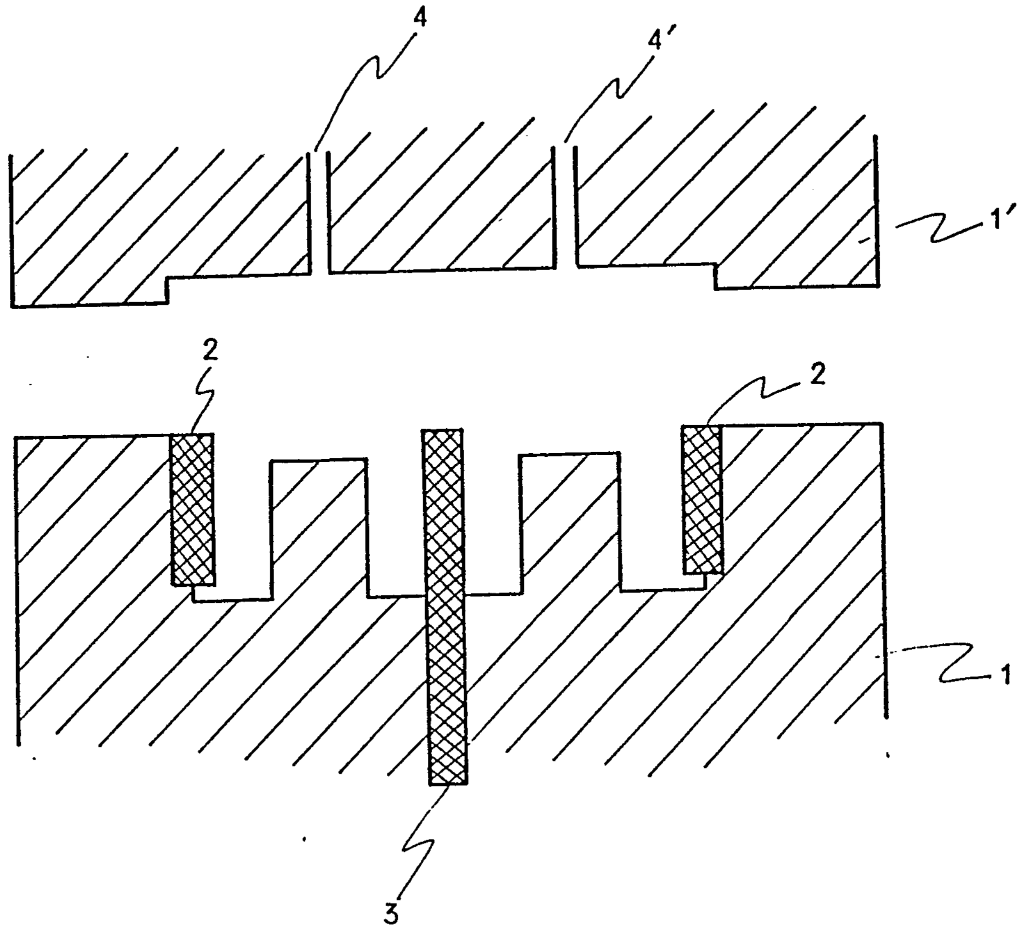


Fig. 1

European Patent Office

# EUROPEAN SEARCH REPORT

Application number

EP 87 30 1821

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 003 674 (MATSUSHITA ELECTRIC INDUSTRIAL CO. LTD.) * page 2, line 9 - page 3, line 2; figures 1, 2, 4 * --- | 1-4,6-11 | H 02 K 21/08<br>H 02 K 1/28<br>H 01 F 41/02 |
| Y | EP-A-0 067 032 (CELANESE CORP.) * page 1, lines 1-3; page 5, lines 18-31; page 7, lines 15-21; page 16, line 23 - page 17, line 4 * --- | 1-4,6-11 | |
| Y | FR-A-2 542 519 (M. BAERMANN GMBH) * page 3, line 33 - page 5, line 8; figure 1 * --- | 1-4,6-11 | |
| A | GB-A-2 099 234 (NV PHILIPS' GLOEILAMPENFABRIEKEN) * page 2, line 3 - page 3, line 70; figures 1-4 * ----- | 1,4 | **TECHNICAL FIELDS SEARCHED (Int. Cl.4)**<br>H 02 K 21/00<br>H 02 K 1/00<br>H 02 K 15/00<br>H 01 B 3/00<br>C 08 G 69/00<br>H 01 F 41/00 |

The present search report has been drawn up for all claims

| Place of search | Date of completion of the search | Examiner |
|---|---|---|
| BERLIN | 15-05-1987 | WEIHS J.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document